# FASCICULE DE BREVET EUROPEEN

(11) **EP 0 525 636 B1**
(45) Date de publication et mention de la délivrance du brevet: **31.01.1996**
(21) Numéro de dépôt: 92112577.9
(22) Date de dépôt: 23.07.1992
(51) Int. Cl.: H01R 13/52, H01R 13/514

(54) **Ensemble de raccordement fiabilisé pour câble multi-conducteurs**
Verbindungsanordnung mit verbesserter Zuverlässigkeit für mehradriges Kabel
Connection assembly having improved reliability for multi-conductor cables

(30) Priorité: 26.07.1991 FR 9109507
(43) Date de publication de la demande: 03.02.1993
(73) Titulaire: ALCATEL CABLE INTERFACE, F-08330 Vrigne aux Bois (FR)
(72) Inventeur: Dupont, Michel, F-08410 Boulzicourt (FR)
(74) Mandataire: Weinmiller, Jürgen

(56) Documents cités:
- DE-A- 1 640 686
- DE-U- 9 101 078
- FR-A- 2 528 241
- GB-A- 2 017 427
- US-A- 4 707 045

## Description

La présente invention concerne les ensembles de raccordement pour câbles multi-conducteurs selon le préambule de la revendication 1 (voir US-A-4 707 045).

Ces ensembles de raccordement sont utilisés notamment sur les réseaux électriques, téléphoniques ou informatiques et sont en général montés sous coffret extérieur.

Un tel ensemble de raccordement est destiné à assurer le raccordement du câble multi-conducteurs le desservant à un ou plusieurs autres câbles ou à des équipements. Le câble multi-conducteurs le desservant peut être électrique, optique ou mixte.

Un ensemble de raccordement du type visé ci-dessus comporte de manière connue au moins un module dit de connexion recevant tout ou partie des conducteurs du câble. Ce module de connexion est à points individuels de contact sur lesquels les conducteurs sont raccordés. A ces points individuels de contact correspondent des liaisons internes dans le module de connexion et éventuellement d'autres points de contact pour des jarretières individuelles alors ainsi raccordées également aux liaisons internes.

Chaque module de connexion reçoit, en outre, des moyens modulaires embrochables sur lui et raccordés aux liaisons internes elles-mêmes raccordées aux différents conducteurs du câble. Ces moyens modulaires peuvent être des cordons de brassage, qui sont par ailleurs reliés à des équipements ou relient deux modules de connexion. Ces moyens modulaires peuvent en variante être des modules électriques de protection de ligne, comportant par exemple un parasurtenseur ou un limiteur de courant à diodes ou varistances, destinés à protéger les lignes définies par les différentes paires du câble électrique raccordées par des jarretières à un ou plusieurs autres câbles électriques ou à des équipements.

Le module de connexion et chacun des moyens modulaires embrochables sont équipés d'éléments de connexion complémentaires, qui sont accessibles sur chacun d'eux. Ces éléments sur le module de connexion forment des jeux d'éléments de connexion sur lui et sont reliés à ses liaisons internes. Les éléments complémentaires sont reliés aux composants électriques du module de protection ou aux conducteurs individuels du cordon de brassage, selon le moyen modulaire concerné.

En raison du montage sous coffret extérieur de tels ensembles de raccordement, ceux-ci restent soumis aux conditions climatiques environnantes, notamment d'humidité ou de brouillard salin. Il est donc nécessaire que les raccordements amovibles des moyens modulaires sur le module de connexion soient rendus étanches.

Pour cette étanchéité, il est connu que les éléments de connexion, en particulier ceux accessibles sur chacun des moyens modulaires, soient entourés d'une coiffe venant entourer les éléments de connexion correspondants du module de connexion, quand ce moyen modulaire est en place sur le module de connexion.

Une telle coiffe s'avère cependant insuffisante en pratique, du fait d'une stagnation d'humidité possible sur ses parois donnant lieu bien souvent à un ruisselement de gouttelettes ou à une pénétration d'humidité par capillarité le long des parois et jusqu'aux éléments internes de connexion.

La présente invention a pour but d'assurer une étanchéité suffisante au niveau des raccordements amovibles effectués dans un tel ensemble de raccordement pour la fiabilisation de cet ensemble.

Elle a pour objet un ensemble de raccordement fiabilisé pour câble multi-conducteurs selon la revendication 1.

L'ensemble de raccordement présente en outre au moins l'une des particularités suivantes :
- ladite coiffe et ledit socle comportent des moyens d'encliquetage complémentaires de la coiffe sur la périphérie du socle;
- chaque premier connecteur est à deuxièmes cheminées individuelles intérieures à ladite coiffe, dans lesquelles sont montés les éléments de connexion de ce premier connecteur;
- des gorges séparent les cheminées de chaque connecteur;
- la coiffe des premiers connecteurs et l'une des cheminées des deuxièmes connecteurs sont à moyens complémentaires de guidage;
- les moyens modulaires sont des modules de protection de ligne, à circuit de protection intégré dans le corps de leur connecteur définissant un logement interne étanche pour ce circuit, ou sont des cordons de brassage.

Les caractéristiques et avantages de la présente invention ressortiront de la description données ci-après en regard d'un exemple de réalisation illustré dans les dessins ci-annexés. Dans ces dessins :
- la figure 1 est une vue partielle en coupe d'un ensemble de raccordement fiabilisé pour câble multi-conducteurs, montrant le raccordement d'un module dit de protection de ligne sur un module dit de connexion réalisé selon la présente invention,
- la figure 2 est une coupe selon la ligne II-II de la figure 1,
- la figure 3 est une vue en coupe partielle de l'ensemble de raccordement, faite selon la ligne III-III de la figure 2.

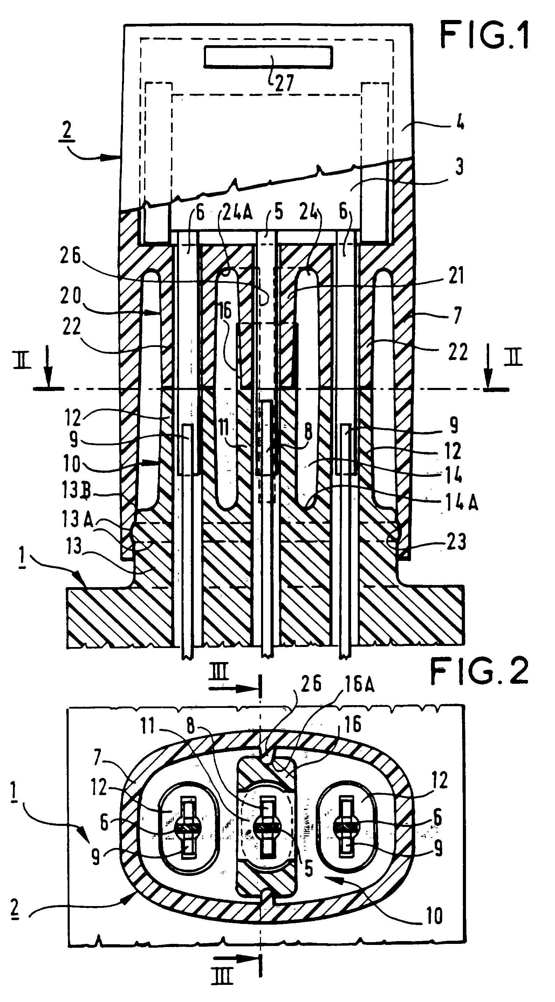

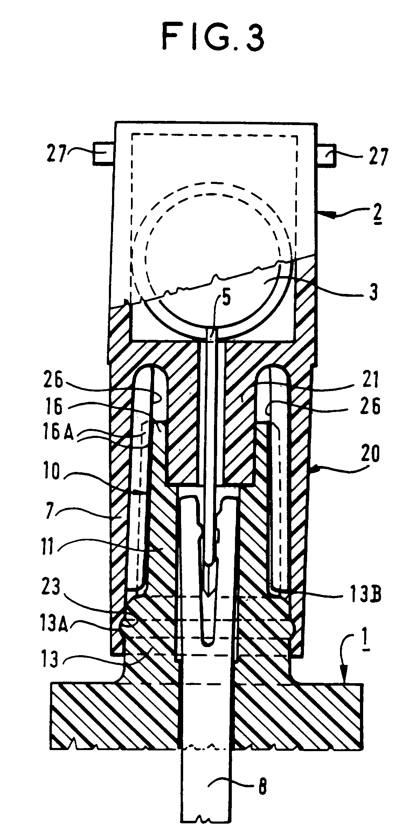

Les figures 1 à 3 montrent, dans un ensemble de raccordement de différentes paires de conducteurs électriques d'un câble multi-conducteurs à différentes jarretières, le montage amovible réalisé selon l'invention sur un module de connexion 1 de modules de protection des différentes lignes tels que le module de protection 2.

Cet ensemble est de type globalement connu et tel que ceux utilisés sur les réseaux téléphoniques et montés sous coffret extérieur. De ce fait, les paires de conducteurs du câble desservant le module de connexion et les Jarretières reçues également sur ce module de connexion et raccordées à ces paires de conducteurs par des liaisons internes, en définissant les différentes lignes à protéger, n'ont pu été représentées.

Le module de protection 2 est embrochable sur le module de connexion et montré en place sur lui. Il est montré à parafoudre 3 de type tripolaire monté dans un boîtier étanche 4. Ce boîtier est par exemple réalisé en deux demi-coquilles soudées de manière étanche, par exemple par ultrasons. Le parafoudre interne 3 est à trois pattes reliées à trois queues de connexion alignées accessibles sur le bottier qu'elles traversent, qui sont notées 5 pour celle centrale dite de masse et 6 pour chacune des deux autres latérales dites de protection de ligne. Ces trois queues de connexion sont dans une coiffe 7 formée directement sur le bottier 4 et les entourant. La coiffe est saillante sur les extrémités de ces queues de connexion.

La coiffe et les queues de connexion internes 5 et 6 définissent sur le bottier un connecteur électrique désigné sous la référence globale 20 et formé avec le module de protection 2, le parafoudre dans cet exemple étant ainsi intégré dans un logement étanche du corps de ce connecteur.

Le module de connexion présente quant à lui, pour la protection des différentes lignes définies par les paires de conducteurs et les jarretières qui leur sont raccordées, des jeux de trois pattes de connexion complémentaires des queues de connexion sur chaque module de protection 2. Les trois pattes de connexion de chacun des jeux sont accessibles sur le module de connexion. Elles sont notées par 8 pour celle centrale dite de masse, qui est reliée dans le module de connexion à une barrette commune de masse, non représentée, et par 9 pour chacune des deux autres latérales, qui sont reliées respectivement aux deux liaisons internes de ligne. Chaque Jeu de pattes 8 et 9 définit un connecteur électrique complémentaire du connecteur 20 et désigné globalement sous la référence 10.

Dans cet exemple, les queues de connexion 5 et 6 sont des broches et les pattes 8 et 9 sont à branches de serrage entre elles des broches. Une disposition inverse avec le connecteur 10 à broches et le connecteur 20 à pattes de serrage est bien entendu équivalente.

Dans le connecteur 10, les pattes 8 et 9 sont montées dans des alvéoles de cheminées individuelles dites centrale 11 pour l'une et latérales 12 pour les deux autres, selon leur disposition relative. Ces cheminées sont saillantes sur la face correspondante du module de connexion 1 et de forme ovalisée. Elles ont leur base sur un socle commun 13, qui est légèrement saillant sur ce module de connexion. Ce socle est lui-même de forme arrondie. Il présente une nervure périphérique 13A, à fond également arrondi. Les cheminées 11 et 12 sur ce socle 13 sont séparées les unes des autres et présentent entre elles des gorges 14, à fond arrondi 14A entre leur base sur le socle. Les deux cheminées latérales 12 ont leur base en retrait par rapport au bord en regard du socle, avec une transition arrondie entre la base de chacune d'elles et le bord du socle, analogue au fond 14A des gorges 14 et non référencée de ce fait. Ce socle a en outre un chanfrein terminal 13B sur son bord périphérique.

Les cheminées 11 et 12, considérées sur leur axe d'alignement, sont de même largeur, par contre la cheminée centrale 11 est saillante sur les deux autres latérales de chaque côté de cet axe. Les deux petites parois latérales parallèles à cet axe d'alignement de la cheminée centrale sont d'épaisseur accrue et constituent deux guides rectilignes notés 16, dans chacun desquels est formée une rainure à fond arrondi de guidage 16A pour l'enfichage du connecteur 20. Ces guides 16 sont saillants sur les deux autres parois de la cheminée centrale 11 et sont sur leur portion terminale saillante séparés l'un de l'autre et sans contact avec la patte centrale 8.

Dans le connecteur 20, les broches 5 et 6 sont également montées dans des cheminées individuelles de forme ovale, dites centrale 21 pour l'une et latérales 22 pour les deux autres. Elles sont saillantes sur ces cheminées. Ces cheminées sont formées sur le bottier 4 dans la partie la plus intérieure de la coiffe 7, qui les entoure et entoure les broches.

La coiffe 7 est également de forme arrondie, qui correspond à la forme du socle 13 sur laquelle s'engage son extrémité. Elle a une rainure 23 de section arrondie sur sa face intérieure à cette extrémité, qui est complémentaire de la nervure 13A qu'elle reçoit quand les cheminées 11, 12 et 21, 22 sont en butée les unes en bout des autres et les broches 5 et 6 enfichées dans les pattes 8, 9.

Les cheminées 21 et 22 sont toutes identiques. Leurs dimensions transversales sont identiques à celles des cheminées 12. Elle sont séparées les unes des autres par des gorges 24 à fond arrondi 24A sur le fond de la coiffe, les deux cheminées latérales laissant des gorges analogues entre elles et les parties en regard de la coiffe.

La coiffe présente en outre deux nervures internes 26, de section arrondie, qui s'étendent en regard de la cheminée centrale, sur la longueur de cette cheminée et sensiblement jusqu'au bout de la coiffe. Ces rainures de guidage sont saillantes sur la paroi interne de la coiffe, sur une hauteur supérieure à la profondeur des rainures 16A, pour n'être reçues que partiellement l'une et l'autre dans ces rainures de guidage 16A.

Le module de protection 2 est enfiché sur le module de connexion en étant ainsi guidé par les nervures 26 et les rainures de guidage 16A, jusqu'à encliquetage à force du module 2 sur le module 1.

Une patte 27 en surépaisseur sur deux faces opposées du module de protection, sur leur partie terminale opposée à celle constituant le connecteur 10 permet une préhension de ce module, pour son désenfichage en particulier.

La forme arrondie de la coiffe 7 empêche une stagnation d'humidité sur ses parois. Le socle 23 sur le module de connexion 1, sa forme arrondie et l'encliquetage à force de la coiffe sur lui et sur sa nervure périphérique 13A créent une barrière d'étanchéité efficace. Les gorges 14 et 24 se correspondant et entourant les différentes cheminées mises en butée bout à bout et leurs éléments de connexion augmentent la longueur des lignes de fuites entre ces éléments raccordés à l'intérieur des cheminées.

En outre, ces gorges 14 et 24 constituent un réservoir à graisse, permettant une étanchéité à l'immersion.

Avantageusement, l'élément de connexion central de l'un des connecteurs s'embroche dans celui central de l'autre connecteur avant que les éléments latéraux s'embrochent les uns dans les autres, ces éléments de connexion latéraux des deux connecteurs étant eux-mêmes connectés légèrement avant l'encliquetage à fond du connecteur 20 sur le connecteur 10.

Ceci ressort de la figure 1, dans laquelle les pattes latérales 9 du connecteur 10 sont plus courtes que sa patte centrale 8, de manière à obtenir la connexion de la broche de masse 5 à cette patte 8 avant la connexion des deux broches 6 aux deux pattes 9. La course des broches 5 et 6 dans les pattes 8 et 9 permet en outre l'encliquetage de la gorge 23 sur le bossage 13A juste sur la fin de course possible. Les efforts d'insertion du connecteur 20 sont ainsi progressifs et non cumulés et restent en conséquence limités.

Dans une variante non représentée mais précisée ci-après, les connecteurs complémentaires tels que 10 et 20 peuvent assurer directement la continuité des liaisons électriques entre les différentes paires de conducteurs d'un câble électrique et des cordons électriques de brassage. Ces cordons sont alors équipés de connecteurs terminaux identiques au connecteur 20 précité, avec la broche centrale de ce connecteur reliée à un fil d'écran de masse de chaque cordon, ou sont équipés de connecteurs terminaux n'ayant que deux broches uniquement auxquelles correspondent alors uniquement deux pattes de serrage dans chaque Jeu de pattes ou connecteur sur le module de connexion.

Dans une autre variante non représentée mais également précisée, des connecteurs optiques complémentaires adaptés selon la présente invention assurent la continuité de liaisons optiques entre différentes fibres ou paires de fibres optiques d'un câble optique desservant un module de connexion et des cordons optiques correspondants de brassage. De tels connecteurs sont en conséquence à un ou à deux éléments optiques de connexion. Ils sont par ailleurs équipés comme les connecteurs 10 et 20 décrits ci-avant, avec leurs éléments optiques de connexion affleurant juste au bout des cheminées individuelles et couplés les uns aux autres intérieurement en assurant une étanchéité renforcée.

Dans une autre variante non représentée mais précisée comme les variantes précitées, pour un câble mixte à paires de conducteurs électriques et à fibres optiques desservant le module de connexion, des connecteurs mixtes complémentaires adaptés selon la présente invention permettent d'assurer la continuité des liaisons des paires électriques et d'une fibre optique associée à chacune de ces paires avec des cordons mixtes individuels de brassage équipés de connecteurs mixtes terminaux. Ces connecteurs mixtes complémentaires sont à deux éléments de connexion électrique, de préférence identiques aux éléments latéraux des connecteurs 10 et 20 précités, et à troisième élément de connexion optique, de préférence central qui affleure en bout de la cheminée correspondante.

## Revendications

1. Ensemble de raccordement fiabilisé pour câble multi-conducteurs, comportant au moins un module dit de connexion de conducteurs du câble à des liaisons internes de ligne, équipé d'une pluralité de jeux de premiers éléments de connexion reliés aux liaisons internes et accessibles sur le module de connexion, et une pluralité de moyens modulaires embrochables sur le module de connexion et équipés d'un jeu de deuxièmes éléments de connexion, accessibles sur chacun d'eux et complémentaires de chaque Jeu de premiers éléments de connexion, chaque jeu de premiers éléments de connexion et le Jeu de deuxièmes éléments de connexion étant dits connecteurs complémentaires et l'un dit premier de deux connecteurs complémentaires étant à coiffe entourant le Jeu d'éléments de connexion de ce premier connecteur et venant entourer celui de l'autre dit deuxième connecteur, quand ils sont en place l'un sur l'autre, chaque deuxième connecteur (10) étant, en outre, à socle (13) portant des premières cheminées individuelles saillantes (11, 12) dans lesquelles sont montés les éléments de connexion (8, 9) de ce deuxième connecteur, caractérisé en ce que ladite coiffe (7) et ledit socle sont de forme arrondie complémentaire d'encastrement à force de l'extrémité de la coiffe sur ledit socle.

2. Ensemble de raccordement selon la revendication 1, caractérisé en ce que ladite coiffe (7) et ledit socle (13) comportent des moyens d'encliquetage complémentaires (23, 13A) de la coiffe sur la périphérie du socle.

3. Ensemble de raccordement selon l'une des revendications 1 et 2, caractérisé en ce que chaque premier connecteur (20) est à deuxièmes cheminées individuelles (21, 22) intérieures à ladite coiffe (7), dans lesquelles sont montés les éléments de connexion de ce premier connecteur.

4. Ensemble de raccordement selon la revendication 3, caractérisé en ce que chacun desdits premier et deuxième connecteurs est à gorges (14, 24) entourant les cheminées individuelles qu'il comporte et les séparant les unes des autres.

5. Ensemble de raccordement selon la revendication 4, caractérisé en ce que lesdites gorges (14, 24) sont remplies de graisse.

6. Ensemble de raccordement selon l'une des revendications 1 à 5, caractérisé en ce que la coiffe (7) de chaque premier connecteur (20) et au moins l'une des premières cheminées (11) de chaque deuxième connecteur (10) portent des moyens complémentaires de guidage, constitués par une nervure (26) et une rainure (16A) de guidage.

7. Ensemble de raccordement selon la revendication 6, caractérisé en ce que ladite rainure de guidage (16A) est de profondeur moindre que la hauteur de ladite nervure de guidage (26), dont la seule partie terminale de section est reçue dans ladite rainure.

8. Ensemble de raccordement selon l'une des revendications 1 à 7 pour câble électrique multi-conducteurs, dans lequel chaque moyen modulaire est un circuit électrique de protection de ligne, caractérisé en ce que le connecteur (20) sur chaque module de protection (2) est directement formé sur un bottier étanche (4) dans lequel est monté le circuit de protection correspondant (3) ainsi intégré dans ce connecteur considéré.

9. Ensemble de raccordement selon la revendication 8 caractérisé en ce que ledit premier connecteur (20) est celui formé sur ledit bottier étanche (4).

10. Ensemble de raccordement selon l'une des revendications 1 à 7, caractérisé en ce que chaque moyen modulaire est un cordon de brassage sur lequel le connecteur correspondant est terminal.

11. Ensemble de raccordement selon l'une des revendications 1 à 7, pour câble mixte à paires multiples de conducteurs électriques et fibres optiques, caractérisé en ce que lesdits éléments de connexion de chacun desdits connecteurs complémentaires sont des éléments de connexion électrique pour deux d'entre eux et un élément de connexion optique pour un troisième, et en ce que chaque moyen modulaire est un cordon mixte de brassage à deux fils électriques et une fibre optique, sur lequel le connecteur correspondant est terminal.

12. Ensemble de raccordement selon l'une des revendications 2 à 10 et dont lesdits connecteurs complémentaires sont chacun à trois éléments de connexion électriques alignés et dits de masse pour celui central et de ligne pour les deux latéraux, caractérisé en ce que l'élément de connexion de masse de l'un de ces connecteurs complémentaires est de longueur différente que ceux de ligne de ce même connecteur, pour leur connexion progressive aux éléments de masse et de ligne de l'autre de ces connecteurs et avant la fin de course de ladite coiffe sur ledit socle.

## Patentansprüche

1. Zuverlässige Anschlußeinheit für Vielleiterkabel, die mindestens einen Verbindungsmodul für Leiter des Kabels mit internen Leitungsverbindungen aufweist, der mit mehreren Sätzen von ersten Verbindungselementen, die mit den inneren Verbindungen verbunden und auf dem Verbindungsmodul zugänglich sind, und mit mehreren auf den Verbindungsmodul aufsteckbaren und mit einem Satz zweiter Verbindungsmittel versehenen Steckermitteln versehen ist, die auf jedem von ihnen zugänglich und zu jedem Satz von ersten Verbindungselementen komplementär sind, wobei jeder Satz von ersten Verbindungselementen und der Satz zweiter Verbindungselemente komplementäre Verbinder genannt werden und ein erster von zwei komplementären Verbindern eine Haube aufweist, die den Satz von Verbindungselementen dieses ersten Verbinders umgibt und den des zweiten Verbinders umgibt, wenn sie aufeinander angeordnet sind, wobei jeder zweite Verbinder (10) außerdem einen Sockel (13) aufweist, der erste vorspringende individuelle Schächte (11, 12) aufweist, in denen die Verbindungselemente (8, 9) dieses zweiten Verbinders montiert sind, dadurch gekennzeichnet, daß die Haube (7) und der Sockel eine komplementäre abgerundete Form aufweisen, wobei das Ende der Haube mit Kraft auf den Sockel aufgeklemmt wird.

2. Anschlußeinheit nach Anspruch 1, dadurch gekennzeichnet, daß die Haube (7) und der Sockel (13) komplementäre Einrastmittel (23, 13A) für die Haube auf dem Rand des Sockels aufweisen.

3. Anschlußeinheit nach einem der Ansprüche 1 und 2, dadurch gekennzeichnet, daß jeder erste Verbinder (20) zwei individuelle Schächte (21, 22) innerhalb der Haube (7) aufweist, in denen die Verbindungselemente dieses ersten Verbinders montiert sind.

4. Anschlußeinheit nach Anspruch 3, dadurch gekennzeichnet, daß jeder erste bzw. zweite Verbinder Kehlen (14 bzw. 24) aufweist, die seine individuellen Schächte umgibt und sie voneinander trennt.

5. Anschlußeinheit nach Anspruch 4, dadurch gekennzeichnet, daß die Kehlen (14, 24) mit Fett gefüllt sind.

6. Anschlußeinheit nach einem der Ansprüche 1 bis 5, dadurch gekennzeichnet, daß die Haube (7) jedes ersten Verbinders (20) und mindestens einer der ersten Schächte (11) jedes zweiten Verbinders (10) komplementäre Führungsmittel aufweisen, die aus einer Führungsrippe (26) und einer Führungsnut (16A) bestehen.

7. Anschlußeinheit nach Anspruch 6, dadurch gekennzeichnet, daß die Führungsnut (16A) eine Tiefe aufweist, die geringer ist als die Höhe der Führungsrippe (26), von der also nur der Endbereich des Querschnitts in der Nut aufgenommen wird.

8. Anschlußeinheit nach einem der Ansprüche 1 bis 7 für ein elektrisches Vielleiterkabel, bei dem jedes Steckermittel eine elektrische Leitungsschutzschaltung ist, dadurch gekennzeichnet, daß der Verbinder (20) auf jedem Schutzmodul (2) direkt an einem dichten Gehäuse (4) ausgebildet ist, in dem die entsprechende Schutzschaltung (3) montiert ist, die so in diesen betrachteten Verbinder integriert ist.

9. Anschlußeinheit nach Anspruch 8, dadurch gekennzeichnet, daß der erste Verbinder (20) derjenige ist, der auf dem dichten Gehäuse (4) ausgebildet ist.

10. Anschlußeinheit nach einem der Ansprüche 1 bis 7, dadurch gekennzeichnet, daß jedes Steckermittel eine Verteilerschnur ist, an der der entsprechende Verbinder das Ende bildet.

11. Anschlußeinheit nach einem der Ansprüche 1 bis 7 für ein gemischtes Kabel ,mit mehreren Paaren von elektrischen Leitern und Lichtleitfasern, dadurch gekennzeichnet, daß zwei Verbindungselemente jedes der komplementären Verbinder elektrische Verbindungsmittel und ein Verbindungselement ein optisches Verbindungselement sind und daß jedes Steckermittel eine gemischte Verteilerschnur mit zwei elektrischen Drähten und einer Lichtleitfaser ist und am Ende den entsprechenden Verbinder trägt.

12. Anschlußeinheit nach einem der Ansprüche 2 bis 10, bei der die komplementären Verbinder je drei fluchtende elektrische Verbindungselemente aufweisen, von denen das zentrale Element ein Masseverbindungselement und die beiden seitlichen Verbinder Leitungsverbindungselemente sind, dadurch gekennzeichnet, daß das Masseverbindungselement eines dieser komplementären Verbinder eine andere Länge als die Leitungsverbindungselemente dieses gleichen Verbinders aufweist, um eine Verbindung zuerst mit den Masse- und dann mit den Leitungselementen des anderen dieser Verbinder herzustellen, und zwar vor dem Hubende der Haube auf dem Sockel.

## Claims

1. Reliable connection system for multiconductor cables including at least one connection module for connecting conductors of the cable to internal line connections, fitted with a plurality of sets of first connection members connected to the internal connections and accessible on the connection module, and a plurality of modular means which plug into the connection module and are fitted with a set of second connection members accessible on each of them and complementary to each set of first connection members, each set of first connection members and the set of second connection members being referred to as complementary connectors and a first of two complementary connectors having a hood surrounding the set of connection members of the first connector and that of the second connector when they are fitted together, each second connector (10) having a socket (13) carrying projecting individual first wells (11, 12) in which are mounted the connection members (8, 9) of the second connector, characterised in that said hood (7) and said socket have complementary rounded shapes enabling forcible nesting of the end of the hood over said socket.

2. Connection system according to claim 1 characterised in that said hood (7) and said socket (13) include complementary means (23, 13A) for clipping the hood to the edge of the socket.

3. Connection system according to claim 1 or claim 2 characterised in that each first connector (20) has individual second wells (21, 22) inside said hood (7) in which are mounted the connection members of the first connector.

4. Connection system according to claim 3 characterised in that each of said first and second connectors has grooves (14, 24) around the individual wells that it includes and separating them from each other.

5. Connection system according to claim 4 characterised in that said grooves (14, 24) are filled with grease.

6. Connection system according to any one of claims 1 to 5 characterised in that the hood (7) of each first connector (20) and at least one of the first wells (11) of each second connector (10) carry complementary guide means comprising a guide rib (26) and a guide groove (16A).

7. Connection system according to claim 6 characterised in that the depth of said guide groove (16A) is less than the height of the guide rib (26) of which only the end part is received in said groove.

8. Connection system according to any one of claims 1 to 7 for a multiconductor electrical cable wherein each modular means is an electrical line protection circuit, characterised in that the connector (20) on each protection module (2) is formed directly on a sealed casing (4) in which the corresponding protection circuit (3) thus integrated into the connector in question is mounted.

9. Connection system according to claim 8 characterised in that said first connector (20) is that formed on said sealed casing (4).

10. Connection assembly according to any one of claims 1 through 7 characterised in that each modular means is a cross-connect cord to the end of which the corresponding connector is fitted.

11. Connection system according to any one of claims 1 to 7 for a hybrid cable with multiple pairs of electrical conductors and optical fibres, characterised in that two of said connection members of each of said complementary connectors are electrical connection members and a third of them is an optical connection member, and in that each modular means is a hybrid cross-connect cord with two electrical wires and one optical fibre to the end of which the corresponding connector is fitted.

12. Connection system according to any one of claims 2 to 10 in which said complementary connectors each have three aligned electrical connection members comprising a central earth connection member and two lateral line connection members, characterised in that the earth connection member of one of the complementary connectors is a different length than the line connection members of the same connector so that they are connected progressively to the earth and line connection members of the other connector before the end of the travel of said hood over said socket.
